# EUROPÄISCHE PATENTANMELDUNG

(11) **EP 1 777 802 A2**
(43) Veröffentlichungstag der Anmeldung: **25.04.2007**
(21) Anmeldenummer: 06120629.8
(22) Anmeldetag: 14.09.2006
(51) Int. Cl.: H02M 3/156, H02M 1/15

(54) **Gleichstromsteller mit aktiver Schwingungsdämpfung und Verfahren zum Betreiben des Gleichstromstellers**

(30) Priorität: 20.10.2005 DE 102005050337
(71) Anmelder: SIEMENS AKTIENGESELLSCHAFT, 80333 München (DE)
(72) Erfinder: Götzenberger, Martin, 85051, Ingolstadt (DE)

(57) **Zusammenfassung**

Dic Erfindung betrifft einen Gleichstromsteller, der eine Einstellvorrichtung, welche ein Strom-Sollwert-Signal in Abhängigkeit einer gefilterten Eingangsspannung derart einstellt, dass eine Schwingung der Eingangsfiltervorrichtung und eine Schwingung des Stromes gegenphasig sind, und/oder eine Steuerungsvorrichtung, welche in Abhängigkeit der Eingangsspannung ein Steuersignal bereitstellt und das Steuersignal zur Ausbildung eines gesteuerten Strom-Istwert-Signals mit dem bereitgestellten Strom-Istwert-Signal addiert, und/oder eine Abschaltvorrichtung, welche eingangsseitig ein Ausschaltsignal empfängt und in Abhängigkeit des empfangenen Ausschaltsignals ein rampcnförmigcs Abschaltsignal bereitstellt, und einen Addierknoten, welcher das Strom-Istwert-Signal mit dem rampenförmigen Abschaltsignal zu einem angehobenen Strom-Istwert-Signal addiert, aufweist.

## Beschreibung

Die Erfindung betrifft einen Gleichstromsteller, der eine Eingangsspannung eines Eingangskondensators in eine Ausgangsspannung eines Ausgangskondensators wandelt.

Bei modernen Brennkraftmaschinen mit Kraftstoffeinspritzung besteht der Bedarf, die verwendeten Einspritzventile mit einem kurzen Stromstoß einer hohen Stromstärke zu versorgen. Der Ausgangskondensator wirkt insbesondere als Energiespeicher, zum Beispiel für das Einspritzventil der Brennkraftmaschine.

Bei der Energieversorgung eines Einspritzventils durch den Ausgangskondensator des Gleichstromstellers stellt die elektromagnetische Verträglichkeit (EMV) ein wichtiges Kriterium bei der Auslegung des Gleichstromstellers dar.

Für die Implementierung des Gleichstromstellers oder DC/DC-Wandlers kommen viele bekannte Topologien und Betriebsverfahren zum Einsatz. Je nach bereitzustellender Leistung und Anforderung an das EMV-Verhalten des Gleichstromstellers werden auch mehrphasige Wandler verwendet. Allerdings besitzen einphasige Wandler oder Gleichstromsteller den Vorteil, an der Lückgrenze betrieben werden zu können. Die Lückgrenze bezeichnet dabei die Grenze zwischen einem lückenden und einem nicht-lückenden Betrieb. Der Betrieb an der Lückgrenze zeichnet sich durch ein besonders günstiges EMV-Verhalten insbesondere im hochfrequenten Betriebsbereich aus, in welchem Maßnahmen zur Reduktion von Störungen, welche die elektromagnetische Verträglichkeit negativ beeinflussen, nur mit einem hohen Aufwand realisierbar sind.

Der Betrieb an der Lückgrenze bedeutet allerdings, dass ein fester Zusammenhang zwischen der Betriebsfrequenz, der Eingansspannung, der Ausgangsspannung und dem Strom-Sollwert des Gleichstromstellers besteht. Dieser feste Zusammenhang steht zunächst im Widerspruch zur Verwendung eines mehrphasigen Gleichstromstellers, der zur Leistungssteigerung bei gleichzeitiger Reduzierung niederfrequenter Rippelströme eingesetzt wird. Zieht beispielsweise eine Stufe des mehrphasigen Gleichstromstellers Strom, so ist der Betrieb des mehrphasigen Gleichstromstellers an der Lückgrenze aufgrund der Abhängigkeit der jeweiligen Frequenzen oder Betriebsfrequenzen der Phasen des Gleichstromstellers von dem jeweils gezogenen Strom herkömmlicherweise nicht mehr möglich.

Diese Änderungen der jeweiligen Frequenzen, insbesondere durch das Ziehen von Strom durch eine oder mehrere Phasen des mehrphasigen Gleichstromstellers hat auch negative Auswirkungen auf die dem mehrphasigen Gleichstromsteller vorgeschaltete Eingangsfiltervorrichtung, welche die empfangene und zu wandelnde Eingangsspannung filtert. Nachdem bei erhöhten EMV-Anforderungen des Eingangsfilters nur Filter höherer Ordnung in Betracht kommen, muss auch eine erhöhte Schwingungsneigung in Kauf genommen werden, da die Schwingungsneigung abhängig von der Filtergüte der Eingangsfiltervorrichtung ist. Die Eingangsfiltervorrichtung wird herkömmlicherweise passiv gedämpft, zum Beispiel durch Serienwiderstände zu den Kondensatoren oder durch Parallelwiderstände zu den Induktivitäten.

Ein weiteres Problem besteht insbesondere, wenn ein mehrphasiger Gleichstromsteller nicht mit einem festen Eingangsspannungswert, sondern über einen Eingangsspannungsbereich betrieben werden soll. Da der Gleichstromsteller stromgeregelt ist, nimmt die Ausgangsleistung des Gleichstromstellers mit zunehmender Eingangsspannung immer weiter zu. Insbesondere für den Bereich, der für das EMV-Verhalten relevant ist, weisen die Ströme deutlich höhere Stromwerte als erforderlich auf, so dass auch die Bauteilebelastung deutlich höher als notwendig wird.

Des Weiteren entsteht aufgrund der Schwingungsfähigkeit des Eingangsfilters insbesondere bei einem harten Abschalten das Problem von zusätzlichen Schwingungen, die ebenfalls die oben erwähnten negativen Auswirkungen, insbesondere erhöhte Energieverluste, haben.

Die Aufgabe der vorliegenden Erfindung besteht daher darin, einen Gleichstromsteller derart zu betreiben, dass Schwingungen seines Eingangsfilters gedämpft werden. Außerdem soll dies nur mit einfachen und/oder kostengünstigen schaltungstechnischen Mitteln realisiert werden.

Eine weitere Aufgabe ist es, einen Gleichstromsteller, insbesondere bei höheren Eingangsspannungen, derart zu betreiben, dass der Maximalwert des Stromes des Gleichstromstellers reduziert ist.

Eine weitere Aufgabe der vorliegenden Erfindung ist, Schwingungen beim Abschalten des Gleichstromstellers zu minimieren.

Erfindungsgemäß wird zumindest eine dieser gestellten Aufgaben durch einen Gleichstromsteller mit den Merkmalen des Patentanspruchs 1 und/oder 11 und/oder 15 und/oder durch ein Verfahren zum Betreiben eines Gleichstromstellers mit den Merkmalen des Patentanspruchs 10 und/oder 14 und/oder 18 gelöst.

Vorteilhafterweise wird eine vorhandene Schwingung durch die gegenphasige Modulation der Schwingung der Eingangsfiltervorrichtung und der Schwingung des Stromes des Gleichstromstellers aktiv gedämpft. Dies ist beim vorliegenden Gleichstromsteller möglich, da die momentane Stromaufnahme nicht von Relevanz ist. Es muss nur nach einer vorgegebenen Zeit der Ausgangskondensator wieder vollständig geladen sein. Vorteilhafterweise wird zwar durch die Modulation die augenblickliche Leistung beeinflusst, nicht jedoch ihr Mittelwert. Die erfindungsgemäße, aktive Dämpfung der Schwingungen arbeitet verlustfrei und reduziert des Weiteren noch die Verluste in den Filterkomponenten. Ein weiterer Vorteil ist, dass der Einsatz zusätzlicher Bauteile erfindungsgemäß sehr gering ist und damit der schaltungstechnische Mehraufwand minimal ist.

Bei der vorliegenden Erfindung wird die gefilterte Eingangsspannung durch einen Widerstand (je Phase bei einem mehrphasigen Gleichstromsteller) auf den Strom-Istwert gekoppelt, wodurch der Spitzenstrom-Schaltpunkt mit steigender Eingangsspannung zu geringeren Stromwerten wandert. Diese Vorwärtskompensation der Eingangsspannung reduziert die Verlustleistung des (mehrphasigen) Gleichstromstellers im normalen Betriebsbereich und sorgt insbesondere im relevanten Betriebsspannungsbereich für geringere Ströme, was mit einem verbesserten EMV-Verhalten gleichzusetzen ist.

Durch das rampenförmige und somit weiche Abschalten des Gleichstromstellers werden Filterschwingungen beim Abschalten reduziert, die herkömmlicherweise nur durch Verluste in den jeweiligen Bauteilen gedämpft werden könnten.

Vorteilhafte Ausgestaltungen und Weiterbildungen der Erfindungen ergeben sich aus den Unteransprüchen sowie aus der Beschreibung unter Bezugnahme auf die Zeichnungen.

Gemäß einer bevorzugten Weiterbildung der Erfindung schaltet die erste Steuerungsvorrichtung den steuerbaren Leistungsschalter aus, wenn ein Strom-Istwert-Signal des Stromes größer als das Strom-Sollwert-Signal ist.

Gemäß einer weiteren bevorzugten Weiterbildung ist der Gleichstromsteller als ein mehrphasiger Gleichstromsteller ausgebildet, der eine Vielzahl N von zwischen dem Eingangskondensator und dem Ausgangskondensator parallel geschalteten Gleichstromstellern aufweist, wobei ein n-ter Gleichstromsteller, mit n∈[1,...,N], einen n-ten Strom zum Laden des Ausgangskondensators bereitstellt.

Gemäß einer weiteren bevorzugten Weiterbildung der Erfindung weist der n-te Gleichstromsteller eine Spitzenstrom-Detektionsvorrichtung auf, die ein Spitzenstrom-Detektionssignal bereitstellt, falls das Strom-Istwert-Signal des n-ten Gleichstromstellers größer als das für den n-ten Gleichstromsteller vorgegebene Strom-Sollwert-Signal ist.

Gemäß einer weiteren bevorzugten Weiterbildung ist eine Regelungsvorrichtung vorgesehen, die zumindest ein RS-Flip-Flop aufweist, das zumindest für den n-ten Gleichstromsteller ein n-tes Phasendifferenzsignal aus einer Phasendifferenz zwischen dem n-ten Spitzenstrom-Detektionssignal und dem (n+1)-ten Spitzenstrom-Detektionssignal ausgangsseitig bereitstellt.

Gemäß einer bevorzugten Ausgestaltung der Erfindung weist die Regelungsvorrichtung zumindest ein RC-Glied auf, welches an seinem Ausgangsknoten in Abhängigkeit des bereitgestellten n-ten Phasendifferenzsignals ein erstes n-tes Strom-Sollwert-Teilsignal bereitstellt.

Gemäß einer weiteren bevorzugten Ausgestaltung ist die Einstellvorrichtung als eine zwischen einem Ausgangsknoten der Eingangsfiltervorrichtung und dem Ausgangsknoten des ersten RC-Glieds angeordnete Serienschaltung eines Einstellwiderstandes und eines Kondensators ausgebildet, wobei die Einstellvorrichtung in Abhängigkeit der gefilterten Eingangsspannung ausgangsseitig ein zweites n-tes Strom-Sollwert-Teilsignal bereitstellt.

Gemäß einer weiteren bevorzugten Ausgestaltung addiert der Ausgangsknoten des ersten RC-Glieds das erste n-te Strom-Sollwert-Teilsignal und das zweite n-te Strom-Sollwert-Teilsignal zu dem n-ten Strom-Sollwert-Signal.

Gemäß einer weiteren bevorzugten Ausgestaltung ist die Spitzenstrom-Detektionsvorrichtung in der ersten Steuerungsvorrichtung integriert vorgesehen.

Gemäß einer weiteren bevorzugten Ausgestaltung weist die zweite Steuerungsvorrichtung auf:
ein zweites RC-Glied, welches die Eingangsspannung filtert und ausgangsseitig eine gefilterte Eingangsspannung bereitstellt;
einen zweiten Widerstand, welcher in Abhängigkeit der gefilterten Eingangsspannung ausgangsseitig das Steuersignal bereitstellt; und
einen Ausgangsknoten, welcher das Strom-Istwert-Signal mit dem Steuersignal zu dem gesteuerten Strom-Istwert-Signal addiert.

Gemäß einer weiteren bevorzugten Weiterbildung ist zwischen dem ersten Widerstand und dem Ausgangsknoten der zweiten Steuerungsvorrichtung ein drittes RC-Glied angeordnet, welches das Strom-Istwert-Signal filtert.

Gemäß einer weiteren bevorzugten Ausgestaltung weist die Abschaltvorrichtung auf:
ein viertes RC-Glied, welches eingangsseitig das Ausschaltsignal empfängt und in Abhängigkeit des empfangenen Ausschaltsignals ein rampenförmiges Ausschaltsignal bereitstellt; und
eine Verstärkungsvorrichtung, welche das rampenförmige Ausschaltsignal zur Ausbildung des rampenförmigen Abschaltsignals verstärkt.

Gemäß einer weiteren bevorzugten Ausgestaltung weist die Verstärkungsvorrichtung einen Transistor, der als Emitter-Folger geschaltet ist, und einen dritten Widerstand, der das rampenförmige Abschaltsignal als Abschaltstrom bereitstellt, auf.

Die Erfindung wird nachfolgend anhand der in den schematischen Figuren angegebenen Ausführungsbeispielen näher erläutert. Es zeigen:
- Fig. 1: ein schematisches Blockschaltbild eines bevorzugten Ausführungsbeispiels des erfindungsgemäßen Gleichstromstellers;
- Fig. 2: ein schematisches Ablaufdiagramm eines ersten Ausführungsbeispiels des erfindungsgemäßen Verfahrens;
- Fig. 3: ein schematisches Ablaufdiagramm eines zweiten Ausführungsbeispiels des erfindungsgemäßen Verfahrens; und
- Fig. 4: ein schematisches Ablaufdiagramm eines dritten Ausführungsbeispiels des erfindungsgemäßen Verfahrens.

In allen Figuren sind gleiche bzw. funktionsgleiche Elemente und Signale - sofern nichts Anderes angegeben ist - mit denselben Bezugszeichen versehen worden.

Im Folgenden werden Bauteile, wie Widerstände oder Kondensatoren, mittels ihrer Bezugszeichen referenziert.

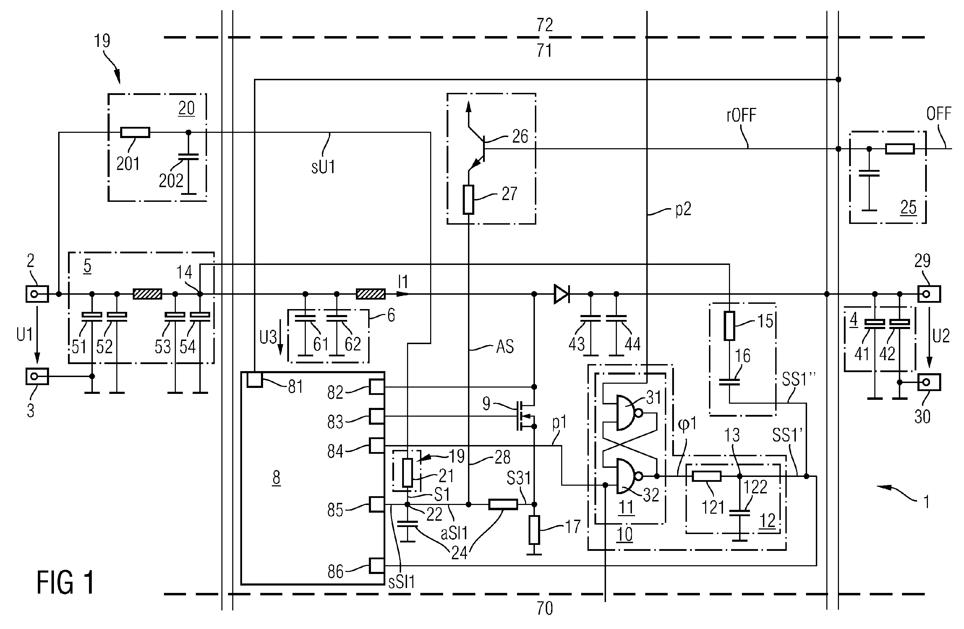

In Fig. 1 ist ein schematisches Blockdiagramm eines Ausführungsbeispiels des erfindungsgemäßen Gleichstromstellers 1 dargestellt. Figur 1 zeigt einen mehrphasigen Gleichstromsteller. Die vorliegende Erfindung ist auch ohne jede Einschränkung auf einen einphasigen Gleichstromsteller anwendbar. Ohne Einschränkung der Allgemeinheit ist der mehrphasige Gleichstromsteller 1 gemäß Fig. 1 als ein dreistufiger Gleichstromsteller ausgebildet (N = 3). Das Ausführungsbeispiel gemäß Fig. 1 zeigt den dreistufigen Gleichstromsteller 1, der einen ersten Gleichstromsteller 71 als erste Phase, einen zweiten Gleichstromsteller 72 als zweite Phase und einen dritten Gleichstromsteller 70 als dritte Phase aufweist. Die Gleichstromsteller 70 - 72 sind zwischen einem Eingangskondensator 6 und einem Ausgangskondensator 4 parallel geschaltet.

Der mehrphasige Gleichstromsteller 1 wandelt die Eingangsspannung U1 in eine Ausgangsspannung U2. Die Eingangsspannung U1 liegt zwischen den Eingangsanschlüssen 2, 3 an. Die Ausgangsspannung U2 liegt zwischen den Ausgangsanschlüssen 29, 30 an. Der Ausgangskondensator 4 wirkt als Energiespeicher. Mittels der gespeicherten Ausgangsspannung U2 wird eine Last (nicht gezeigt) mit Energie versorgt. Die Last ist beispielsweise als ein Einspritzventil einer Brennkraftmaschine eines Automobils ausgebildet.

Der Eingangskondensator 6 ist vorzugsweise als eine Parallelschaltung der Keramik-Kondensatoren 61 und 62 ausgebildet. Der Ausgangskondensator 4 ist beispielsweise als eine Parallelschaltung der Kondensatoren 41 - 44 ausgebildet, wobei die Kondensatoren 41 und 42 jeweils als ein Elektrolyt-Kondensator und die Kondensatoren 43 und 44 jeweils als ein Keramik-Kondensator ausgebildet sind.

Vorzugsweise weist der mehrphasige Gleichstromsteller 1 eine Eingangsfiltervorrichtung 5 auf. Die Eingangsfiltervorrichtung 5 ist zwischen den Eingangsanschlüssen 2, 3 und dem Eingangskondensator 6 gekoppelt, insbesondere parallel zu dem Eingangskondensator 6 geschaltet. Die Eingangsfiltervorrichtung 5 filtert die Eingangsspannung U1, so dass an dem Eingangskondensator 6 eine gefilterte Eingangsspannung U3 bereitgestellt ist. Beispielsweise weist die Eingangsfiltervorrichtung 5 die Elektrolytkondensatoren 51 - 54 und ein induktives Stellglied 55 auf.

Insbesondere weist jeder der N Gleichstromsteller 70 - 72, beispielsweise der erste Gleichstromsteller 71, eine Einstellvorrichtung 15, 16 auf, die ein Strom-Sollwert-Signal SS1 in Abhängigkeit der gefilterten Eingangsspannung U3 derart einstellt, dass eine Schwingung der Eingangsfiltervorrichtung 5 und eine Schwingung des ersten Stromes I1 gegenphasig sind.

Außerdem ist eine erste Steuerungsvorrichtung 8 vorgesehen, welche einen steuerbaren Leistungsschalter 9 zur Steuerung einer Stromentnahme aus dem Eingangskondensator 6 jeweils ausschaltet, falls ein Strom-Istwert-Signal SI1 des ersten Stromes I1 größer als das Strom-Sollwert-Signal SS1 ist.

Vorzugsweise weist jeder der N Gleichstromsteller 70 - 72 eine Spitzenstrom-Detektionsvorrichtung auf, die ein Spitzenstrom-Detektionssignal p1, p2 bereitstellt, falls das jeweilige Strom-Istwert-Signal SI1 des n-ten Gleichstromstellers 70 - 72 größer als das für den n-ten Gleichstromsteller 70 - 72 vorgegebene Strom-Sollwert-Signal SS1 ist. Beispielsweise stellt die Spitzenstrom-Detektionsvorrichtung des ersten Gleichstromstellers 71 das Spitzenstrom-Detektionssignal p1 bereit, falls das Strom-Istwert-Signal SI1 des ersten Gleichstromstellers 71 größer als das für den ersten Gleichstromsteller 71 vorgegebene Strom-Sollwert-Signal SS1 ist.

Außerdem ist eine Regelungsvorrichtung 10 vorgesehen. Vorzugsweise weist die Regelungsvorrichtung 10 für jede Phase 70 - 72 ein RS-Flip-Flop 11 auf. Das RS-Flip-Flop 11 des ersten Gleichstromstellers 71 stellt beispielsweise ein erstes Phasendifferenzsignal ϕ1 aus einer Phasendifferenz zwischen dem ersten Spitzenstrom-Detektionssignal p1 und dem zweiten Spitzenstrom-Detektionssignal p2 des zweiten Gleichstromstellers 72 ausgangsseitig bereit.

Weiterhin weist die Regelungsvorrichtung 10 zumindest ein erstes RC-Glied 12 auf. Das erste RC-Glied 12 stellt an seinem Ausgangsknoten 13 in Abhängigkeit des bereitgestellten Phasendifferenzsignals ϕ1 ein erstes Strom-Sollwert-Teilsignal SS1' bereit.

Vorzugsweise ist die Einstellvorrichtung 15, 16 als eine zwischen einem Ausgangsknoten 14 der Eingangsfiltervorrichtung 5 und dem Ausgangsknoten 13 des ersten RC-Glieds 12 angeordnete Serienschaltung eines Einstellwiderstandes 15 und eines Kondensators 16 ausgebildet. Mittels des Widerstandes 15 wird ein zweites Strom-Sollwert-Teilsignal SS1" in Abhängigkeit der gefilterten Eingangsspannung U3 bereitgestellt. Der Kondensator 16 dient zur Entkopplung eines Gleichstrompfades zwischen den Knoten 13 und 14.

Insbesondere werden mittels des Ausgangsknotens 13 des ersten RC-Glieds 12 das erste Strom-Sollwert-Teilsignal SS1' und das zweite Strom-Sollwert-Teilsignal SS1" zu dem Strom-Sollwert-Signal SS1 addiert.

Vorzugsweise ist die Spitzenstrom-Detektionsvorrichtung in der Steuervorrichtung 8 integriert vorgesehen.

Außerdem ist ein erster Widerstand 17 vorgesehen, der in Abhängigkeit des ersten Stromes I1, der ausgangsseitig von dem induktiven Stellglied 18 des ersten Gleichstromstellers 71 bereitgestellt ist, das Strom-Istwert-Signal SI1 bereitstellt.

Des Weiteren ist eine zweite Steuerungsvorrichtung 19 vorgesehen, die in Abhängigkeit der Eingangsspannung U1 ein Steuersignal S1 bereitstellt. Außerdem addiert die zweite Steuerungsvorrichtung 19 das Steuersignal S1 mit dem bereitgestellten Strom-Istwert-Signal SI1 zur Ausbildung eines gesteuerten Strom-Istwert-Signals sSI1. In einem solchen Fall schaltet die erste Steuerungsvorrichtung 8 den steuerbaren Leistungsschalter 9 jeweils dann aus, wenn das gesteuerte Strom-Istwert-Signal sSI1 größer als das Strom-Sollwert-Signal SS1 ist.

Vorzugsweise weist die zweite Steuerungsvorrichtung 19 ein zweites RC-Glied 20, einen zweiten Widerstand 21 und einen Ausgangsknoten 22 auf. Das zweite RC-Glied 20 filtert die Eingangsspannung U1 und stellt ausgangsseitig eine gefilterte Ausgangsspannung sU1 bereit. Der zweite Widerstand 21 stellt in Abhängigkeit der gefilterten Eingangsspannung sU1 ausgangsseitig das Steuersignal S1 bereit. Mittels des Ausgangsknotens 22 wird das Strom-Istwert-Signal SI1 mit dem Steuersignal S1 zu dem gesteuerten Strom-Istwert-Signal sSI1 addiert. Vorzugsweise besteht das zweite RC-Glied 20 aus dem Widerstand 201 und dem Kondensator 202.

Insbesondere ist ein drittes RC-Glied 24 zwischen dem ersten Widerstand 17 und dem Ausgangsknoten 22 der zweiten Steuerungsvorrichtung 19 zur Filterung des Strom-Istwert-Signals SI1 vorgesehen.

Außerdem ist eine Abschaltvorrichtung 25, 26, 27 vorgesehen, welche eingangsseitig ein Ausschaltsignal OFF empfängt, das insbesondere binäre Werte annehmen kann. Die Abschaltvorrichtung 25, 26, 27 weist ein viertes RC-Glied 25 auf, das eingangsseitig das Ausschaltsignal OFF empfängt und in Abhängigkeit des empfangenen Ausschaltsignals OFF ein rampenförmiges Ausschaltsignal rOFF bereitstellt. Das vierte RC-Glied 25 weist einen Widerstand 251 und einen Kondensator 252 auf.

Weiter weist die Abschaltvorrichtung eine Verstärkungsvorrichtung 26, 27 auf, welche das rampenförmige Ausschaltsignal rOFF zur Ausbildung des rampenförmigen Abschaltsignals AS verstärkt. Dabei ist die Verstärkungsvorrichtung 26, 27 vorzugsweise durch einen Transistor 26, der als Emitter-Folger geschaltet ist, und durch einen dritten Widerstand 27, der das rampenförmige Abschaltsignal AS als Abschaltstrom bereitstellt, ausgebildet.

In einem solchen Fall schaltet die erste Steuerungsvorrichtung 8 den steuerbaren Leistungsschalter 9 jeweils dann aus, wenn das angehobene Strom-Istwert-Signal aSI1 größer als das Strom-Sollwert-Signal SS1 ist.

Zum Empfangen und Senden der entsprechenden Signale weist die erste Steuerungsvorrichtung die Ports 81 - 86 auf. Dabei dient der Port 81 zum Empfangen des rampenförmigen Ausschaltsignals rOFF. Der Port 82 dient insbesondere als Eingangsport für eine Rückschwing-Detektionsvorrichtung, die insbesondere auch in der ersten Steuerungsvorrichtung 8 integriert ist. Die Rückschwing-Detektionsvorrichtung misst eine Schalterspannung des steuerbaren Leistungsschalters 9 beim Freilaufen des ersten Stromes I1 über die Freilaufdiode 90. Der Port 83 dient zur Ansteuerung des Leistungsschalters 9 durch die erste Steuerungsvorrichtung 8. Mittels des Ports 85 wird das Strom-Istwert-Signal SI1 empfangen und weiterverarbeitet. Mittels des Ports 86 wird das Strom-Sollwert-Signal SS1 empfangen und weiterverarbeitet.

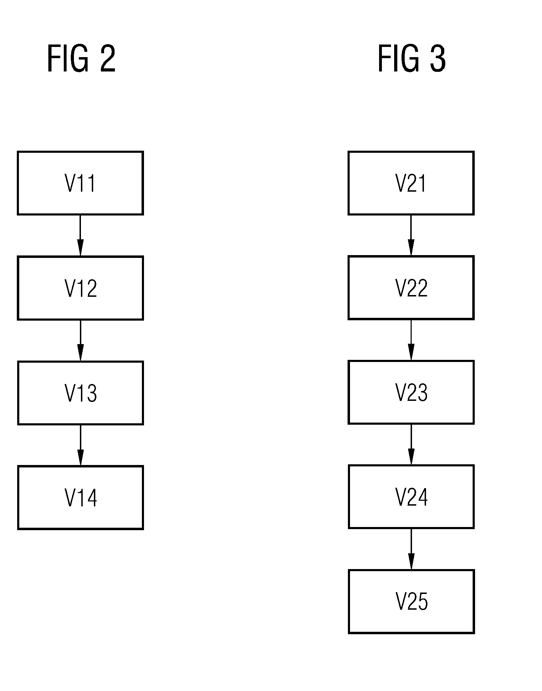

Fig. 2 zeigt ein schematisches Ablaufdiagramm eines ersten Ausführungsbeispiels des erfindungsgemäßen Verfahrens zum Betreiben eines Gleichstromstellers 1, der eine zwischen zwei Eingangsanschlüssen 2, 3 anliegende Eingangsspannung U1 in eine Ausgangsspannung U2 eines Ausgangskondensators 4 wandelt.

Nachfolgend wird das erfindungsgemäße Verfahren anhand des Blockschaltbildes in Fig. 2 erläutert. Das erfindungsgemäße Verfahren weist folgende Verfahrensschritte auf:
Verfahrensschritt V11:
   Koppeln einer Eingangsfiltervorrichtung 5 zwischen den Eingangsanschlüssen 2, 3 und einem Eingangskondensator 6, welche die Eingangsspannung U1 filtert, so dass an dem Eingangskondensator 6 eine gefilterte Eingangsspannung U3 bereitgestellt wird.
Verfahrensschritt V12:
   Bereitstellen eines von zwischen dem Eingangskondensator 6 und dem Ausgangskondensator 4 parallel geschalteten Gleichstromstellers 1, der einen Strom I1 zum Laden des Ausgangskondensators 4 bereitstellt.
Verfahrensschritt V13:
   Einstellen eines Strom-Sollwert-Signals SS1 in Abhängigkeit der gefilterten Eingangsspannung U3 derart, dass eine Schwingung der Eingangsfiltervorrichtung 5 und eine Schwingung des Stromes I1 gegenphasig werden.
Verfahrensschritt V14:
   Steuern eines steuerbaren Leistungsschalter 9 zur Steuerung einer Stromentnahme aus dem Eingangskondensator 6 in Abhängigkeit des Strom-Sollwert-Signals SS1. Vorzugsweise wird der Leistungsschalter 9 jeweils dann ausgeschaltet, falls das Strom-Istwert-Signal SI1 des Stromes I1 größer als das Strom-Sollwert-Signal SS1 ist.

Fig. 3 zeigt ein schematisches Ablaufdiagramm eines zweiten Ausführungsbeispiels des erfindungsgemäßen Verfahrens zum Betreiben eines Gleichstromstellers 1, der eine Eingangsspannung U1 eines Eingangskondensators 6 in eine Ausgangsspannung U2 eines Ausgangskondenstors 4 wandelt.

Nachfolgend wird das erfindungsgemäße Verfahren anhand des Blockschaltbildes in Fig. 3 erläutert. Das erfindungsgemäße Verfahren weist folgende Verfahrensschritte auf:
Verfahrensschritt V21:
   Bereitstellen eines zwischen dem Eingangskondensator 6 und dem Ausgangskondensator 4 parallel geschalteten Gleichstromstellers 1, der einen Strom I1 zum Laden des Ausgangskondensators 4 bereitstellt.
Verfahrensschritt V22:
   Bereitstellen eines Strom-Istwert-Signals SI1 in Abhängigkeit des Stroms I1, der ausgangsseitig von einem induktiven Stellglied 18 des Gleichstromstellers 71 bereitgestellt wird.
Verfahrensschritt V23:
   Bereitstellen eines Steuersignals S1 in Abhängigkeit der Eingangsspannung U1.
Verfahrensschritt V24:
   Addieren des Steuersignals S1 mit dem bereitgestellten Strom-Istwert-Signal SI1 zur Ausbildung eines gesteuerten Strom-Istwert-Signals sSI1.
Verfahrensschritt V25:
   Steuern eines steuerbaren Leistungsschalters 9 zur Steuerung einer Stromentnahme aus dem Eingangskondensator 6 derart, dass der Leistungsschalters 9 jeweils ausgeschaltet wird, falls das gesteuerte Strom-Istwert-Signal sSI1 größer als ein für Gleichstromsteller 71 vorgegebenes Strom-Sollwert-Signal SS1 ist.

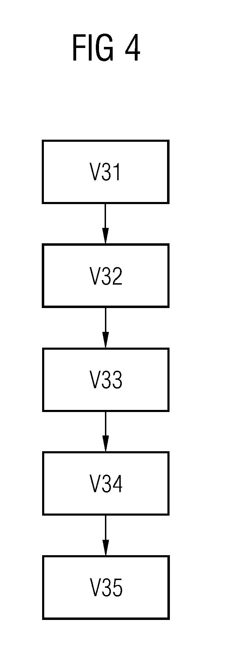

Fig. 4 zeigt ein schematisches Ablaufdiagramm eines dritten Ausführungsbeispiels des erfindungsgemäßen Verfahrens zum Betreiben eines Gleichstromstellers 1, der eine Eingangsspannung U1 eines Eingangskondensators 6 in eine Ausgangsspannung U2 eines Ausgangskondensators 4 wandelt. Das gemäß Fig. 4 dargestellte erfindungsgemäße Verfahren weist die folgenden Verfahrensschritte auf:
Verfahrensschritt V31:
   Bereitstellen eines zwischen dem Eingangskondensator 6 und dem Ausgangskondensator 4 parallel geschalteten Gleichstromstellers 1, der einen Strom I1 zum Laden des Ausgangskondensators 4 bereitstellt.
Verfahrensschritt V32:
   Bereitstellen eines Strom-Istwert-Signals SI1 in Abhängigkeit des Stromes I1, der ausgangsseitig von einem induktiven Stellglied 18 des Gleichstromstellers 1 bereitgestellt ist.
Verfahrensschritt V33:
   Generieren eines rampenförmigen Abschaltsignals AS in Abhängigkeit eines empfangenen Ausschaltsignals OFF.
Verfahrensschritt V34:
   Addieren des Strom-Istwert-Signals SI1 mit dem rampenförmigen Abschaltsignal AS zu einem angehobenen Strom-Istwert-Signal aSI1.
Verfahrensschritt V35:
   Steuern eines steuerbaren Leistungsschalters 9 zur Steuerung einer Stromentnahme aus dem Eingangskondensator 6 derart, dass der Leistungsschalters 9 jeweils ausgeschaltet wird, falls das angehobene Strom-Istwert-Signal aSI1 größer als ein für den Gleichstromsteller 71 vorgegebenes Strom-Sollwert-Signal SS1 ist.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Beispielsweise ist die vorliegende Erfindung nicht nur wie in Fig. 1 auf Hochsetzsteller, sondern auch allgemein auf Tiefsetzsteller anwendbar.

## Patentansprüche

1. Gleichstromsteller (1), der eine zwischen zwei Eingangsanschlüssen (2,3) anliegende Eingangsspannung (U1) in eine Ausgangsspannung (U2) eines Ausgangskondensators (4) wandelt, wobei der Gleichstromsteller (1) einen Strom (I1) zum Laden des Ausgangskondensators (4) bereitstellt, mit:
a) einer Eingangsfiltervorrichtung (5), welche zwischen den Eingangsanschlüssen (2, 3) und einem Eingangskondensator (6) gekoppelt ist und die Eingangsspannung (U1) filtert, so dass an dem Eingangskondensator (6) eine gefilterte Eingangsspannung (U3) bereitgestellt ist; und
b) einer Einstellvorrichtung (15, 16), welche ein Strom-Sollwert-Signal (SS1) in Abhängigkeit der gefilterten Eingangsspannung (U3) derart einstellt, dass eine Schwingung der Eingangsfiltervorrichtung (5) und eine Schwingung des Stromes (I1) gegenphasig sind; und
c) einer ersten Steuerungsvorrichtung (8), welche einen steuerbaren Leistungsschalter (9) zur Steuerung einer Stromentnahme aus dem Eingangskondensator (6) in Abhängigkeit des Strom-Sollwert-Signals (SS1) schaltet.

2. Gleichstromsteller nach Anspruch 1,
**dadurch gekennzeichnet,**
**dass** die erste Steuerungsvorrichtung (8) den steuerbaren Leistungsschalter (9) jeweils ausschaltet, falls ein Strom-Istwert-Signal (SI1) des Stromes (I1) größer als das Strom-Sollwert-Signal (SS1) ist.

3. Gleichstromsteller nach Anspruch 1 oder 2,
**dadurch gekennzeichnet,**
**dass** der Gleichstromsteller als ein mehrphasiger Gleichstromsteller ausgebildet ist, der eine Vielzahl N von zwischen dem Eingangskondensator (6) und dem Ausgangskondensator (4) parallel geschalteten Gleichstromstellern (70-72) aufweist, wobei ein n-ter Gleichstromsteller (70-72), mit n∈[1,...,N], einen n-ten Strom (31) zum Laden des Ausgangskondensators (4) bereitstellt.

4. Gleichstromsteller nach Anspruch 3,
**dadurch gekennzeichnet,**
**dass** der n-te Gleichstromsteller (70-72) eine Spitzenstrom-Detektionsvorrichtung aufweist, die ein Spitzenstrom-Detektionssignal (p1, p2) bereitstellt, falls das Strom-Istwert-Signal (SI1) des n-ten Gleichstromstellers (70-72) größer als das für den n-ten Gleichstromsteller (70-72) vorgegebene Strom-Sollwert-Signal (SS1) ist.

5. Gleichstromsteller nach Anspruch 3 oder 4,
**dadurch gekennzeichnet,**
**dass** eine Regelungsvorrichtung (10) vorgesehen ist, die zumindest ein RS-Flip-Flop (11) aufweist, welches zumindest für den n-ten Gleichstromsteller (71) ein n-tes Phasendifferenzsignal (ϕ1) aus einer Phasendifferenz zwischen dem n-ten Spitzenstrom-Detektionssignal (p1) und dem (n+1)-ten Spitzenstrom-Detektionssignal (p2) ausgangsseitig bereitstellt.

6. Gleichstromsteller nach einem oder mehreren der vorstehenden Ansprüche 3 bis 5,
**dadurch gekennzeichnet,**
**dass** die Regelungsvorrichtung (10) zumindest ein erstes RC-Glied (12) aufweist, welches an seinem Ausgangsknoten (13) in Abhängigkeit des bereitgestellten n-ten Phasendifferenzsignals (ϕ1) ein erstes n-tes Strom-Sollwert-Teilsignal (SS1') bereitstellt.

7. Gleichstromsteller nach einem oder mehreren der vorstehenden Ansprüche,
**dadurch gekennzeichnet,**
**dass** die Einstellvorrichtung (15, 16) als eine zwischen einem Ausgangsknoten (14) der Eingangsfiltervorrichtung (5) und dem Ausgangsknoten (13) des ersten RC-Glieds (12) angeordnete Serienschaltung eines Einstellwiderstandes (15) und eines Kondensators (16) ausgebildet ist, wobei die Einstellvorrichtung (15, 16) in Abhängigkeit der gefilterten Eingangsspannung (U3) ausgangsseitig ein zweites n-tes Strom-Sollwert-Teilsignal (SS1") bereitstellt.

8. Gleichstromsteller nach einem oder mehreren der vorstehenden Ansprüche,
**dadurch gekennzeichnet,**
**dass** der Ausgangsknoten (13) des ersten RC-Glieds (12) das erste n-te Strom-Sollwert-Teilsignal (SS1') und das zweite n-te Strom-Sollwert-Teilsignal (SS1'') zu dem n-ten Strom-Sollwert-Signal (SS1) addiert.

9. Gleichstromsteller nach einem oder mehreren der vorstehenden Ansprüche,
**dadurch gekennzeichnet,**
**dass** die Spitzenstrom-Detektionsvorrichtung in der ersten Steuerungsvorrichtung (8) integriert vorgesehen ist.

10. Verfahren zum Betreiben eines Gleichstromstellers (1), insbesondere eines Gleichstromstellers nach einem der vorstehenden Ansprüche 1 bis 9, der eine zwischen zwei Eingangsanschlüssen (2,3) anliegende Eingangsspannung (U1) in eine Ausgangsspannung (U2) eines Ausgangskondensators (4) wandelt, mit den Schritten:
a) Koppeln einer Eingangsfiltervorrichtung (5) zwischen den Eingangsanschlüssen (2, 3) und einem Eingangskondensator (6), welche die Eingangsspannung (U1) filtert, so dass an dem Eingangskondensator (6) eine gefilterte Eingangsspannung (U3) bereitgestellt wird;
b) Bereitstellen eines zwischen dem Eingangskondensator (6) und dem Ausgangskondensator (4) parallel geschalteten Gleichstromstellers 1, der einen Strom (I1) zum Laden des Ausgangskondensators (4) bereitstellt;
c) Einstellen eines Strom-Sollwert-Signals (SS1) in Abhängigkeit der gefilterten Eingangsspannung (U3) derart, dass eine Schwingung der Eingangsfiltervorrichtung (5) und eine Schwingung des Stromes (I1) gegenphasig werden; und
d) Steuern eines steuerbaren Leistungsschalter (9) zur Steuerung einer Stromentnahme aus dem Eingangskondensator (6) in Abhängigkeit des Strom-Sollwert-Signals (SS1).

11. Gleichstromsteller (1), der eine Eingangsspannung (U1) eines Eingangskondensators (6) in eine Ausgangsspannung (U2) eines Ausgangskondensators (4) wandelt, wobei der Gleichstromsteller (1) einen Strom (I1) zum Laden des Ausgangskondensators (4) bereitstellt, mit:
a) einem ersten Widerstand (17), welcher in Abhängigkeit des Stroms (I1), der ausgangsseitig von einem induktiven Stellglied (18) des Gleichstromstellers (1) bereitgestellt ist, ein Strom-Istwert-Signal (SI1) bereitstellt;
b) einer zweiten Steuerungsvorrichtung (19), welche in Abhängigkeit der Eingangsspannung (U1) ein Steuersignal (S1) bereitstellt und das Steuersignal (S1) zur Ausbildung eines gesteuerten Strom-Istwert-Signals (sSI1) mit dem bereitgestellten Strom-Istwert-Signal (SI1) addiert; und
c) einer ersten Steuerungsvorrichtung (8), welche einen steuerbaren Leistungsschalters (9) zur Steuerung einer Stromentnahme aus dem Eingangskondensator (6) jeweils ausschaltet, falls das gesteuerte Strom-Istwert-Signal (sSI1) größer als ein für den Gleichstromsteller (1) vorgegebenes Strom-Sollwert-Signal (SS1) ist.

12. Gleichstromsteller nach Anspruch 11,
**dadurch gekennzeichnet,**
**dass** die zweite Steuerungsvorrichtung (19) aufweist:
a) ein zweites RC-Glied (20), welches die Eingangsspannung (U1) filtert und ausgangsseitig eine gefilterte Eingangsspannung (sU1) bereitstellt;
b) einen zweiten Widerstand (21), welcher in Abhängigkeit der gefilterten Eingangsspannung (sU1) ausgangsseitig das Steuersignal (S1) bereitstellt; und
c) einen Ausgangsknoten (22), welcher das Strom-Istwert-Signal (SI1) mit dem Steuersignal (S1) zu dem gesteuerten Strom-Istwert-Signal (sSI1) addiert.

13. Gleichstromsteller nach Anspruch 11 oder 12,
**dadurch gekennzeichnet,**
**dass** zwischen dem ersten Widerstand (17) und dem Ausgangsknoten (22) der zweiten Steuerungsvorrichtung (19) ein drittes RC-Glied (24) angeordnet ist, welches das Strom-Istwert-Signal (SI1) filtert.

14. Verfahren zum Betreiben eines Gleichstromstellers (1), insbesondere eines Gleichstromstellers nach einem der vorstehenden Ansprüche 11 bis 13, der eine Eingangsspannung (U1) eines Eingangskondensators (6) in eine Ausgangsspannung (U2) eines Ausgangskondensators (4) wandelt, mit den Schritten:
a) Bereitstellen eines zwischen dem Eingangskondensator (6) und dem Ausgangskondensator (4) parallel geschalteten Gleichstromstellers (1), der einen Strom (I1) zum Laden des Ausgangskondensators (4) bereitstellt;
b) Bereitstellen eines Strom-Istwert-Signals (SI1) in Abhängigkeit des Stroms (I1), der ausgangsseitig von einem induktiven Stellglied (18) des Gleichstromstellers (1) bereitgestellt wird;
c) Bereitstellen eines Steuersignals (S1) in Abhängigkeit der Eingangsspannung (U1);
d) Addieren des Steuersignals (S1) mit dem bereitgestellten Strom-Istwert-Signal (SI1) zur Ausbildung eines gesteuerten Strom-Istwert-Signals (sSI1); und
e) Steuern eines steuerbaren Leistungsschalters (9) zur Steuerung einer Stromentnahme aus dem Eingangskondensator (6) derart, dass der Leistungsschalters (9) jeweils ausgeschaltet wird, falls das gesteuerte Strom-Istwert-Signal (sSI1) größer als ein für den Gleichstromsteller (71) vorgegebenes Strom-Sollwert-Signal (SS1) ist.

15. Gleichstromsteller (1), der eine Eingangspannung (U1) eines Eingangskondensators (6) in eine Ausgangsspannung (U2) eines Ausgangskondensators (4) wandelt, wobei der Gleichstromsteller einen Strom (I1) zum Laden des Ausgangskondensators (4) bereitstellt, mit:
a) einem ersten Widerstand (17), welcher in Abhängigkeit des Stromes (I1), der ausgangsseitig von einem induktiven Stellglied (18) des Gleichstromstellers (1) bereitgestellt ist, ein Strom-Istwert-Signal (SI1) bereitstellt;
b) einer Abschaltvorrichtung (25, 26, 27), welche eingangsseitig ein Ausschaltsignal (OFF) empfängt und in Abhängigkeit des empfangenen Ausschaltsignals (OFF) ein rampenförmiges Abschaltsignal (AS) bereitstellt;
c) einem Addierknoten (28), welcher das Strom-Istwert-Signal (SI1) mit dem rampenförmigen Abschaltsignal (AS) zu einem angehobenen Strom-Istwert-Signal (aSI1) addiert; und
d) einer ersten Steuerungsvorrichtung (8), welche einen steuerbaren Leistungsschalter (9) zur Steuerung einer Stromentnahme aus dem Eingangskondensator (6) jeweils ausschaltet, falls das angehobene Strom-Istwert-Signal (aSI1) größer als ein für den Gleichstromsteller (1) vorgegebenes Strom-Sollwert-Signal (SS1) ist.

16. Gleichstromsteller nach Anspruch 15,
**dadurch gekennzeichnet,**
**dass** die Abschaltvorrichtung (25, 26, 27) aufweist:
- ein viertes RC-Glied (25), welches eingangsseitig das Ausschaltsignal (OFF) empfängt und in Abhängigkeit des empfangenen Ausschaltsignals (OFF) ein rampenförmiges Ausschaltsignal (rOFF) bereitstellt; und
- eine Verstärkungsvorrichtung (26, 27), welche das rampenförmige Ausschaltsignal (rOFF) zur Ausbildung des rampenförmigen Abschaltsignals (AS) verstärkt.

17. Gleichstromsteller nach Anspruch 16,
**dadurch gekennzeichnet,**
**dass** die Verstärkungsvorrichtung (26, 27) einen Transistor (26), der als Emitter-Folger geschaltet ist, und einen dritten Widerstand (27), der das rampenförmige Abschaltsignal (AS) als Abschaltstrom bereitstellt, aufweist.

18. Verfahren zum Betreiben eines Gleichstromstellers, insbesondere eines Gleichstromstellers nach einem der vorstehenden Ansprüche 15 bis 17, der eine Eingangspannung (U1) eines Eingangskondensators (6) in eine Ausgangsspannung (U2) eines Ausgangskondensators (4) wandelt, mit den Schritten:
a) Bereitstellen eines zwischen dem Eingangskondensator (6) und dem Ausgangskondensator (4) parallel geschalteten Gleichstromstellers (1), der einen Strom (I1) zum Laden des Ausgangskondensators (4) bereitstellt;
b) Bereitstellen eines Strom-Istwert-Signals (SI1) in Abhängigkeit des Stromes (I1), der ausgangsseitig von einem induktiven Stellglied (18) des Gleichstromstellers (1) bereitgestellt wird;
c) Generieren eines rampenförmigen Abschaltsignals (AS) in Abhängigkeit eines empfangenen Ausschaltsignals (OFF);
d) Addieren des Strom-Istwert-Signals (SI1) mit dem rampenförmigen Abschaltsignal (AS) zu einem angehobenen Strom-Istwert-Signal (aSI1); und
e) Steuern eines steuerbaren Leistungsschalters (9) zur Steuerung einer Stromentnahme aus dem Eingangskondensator (6) derart, dass der Leistungsschalters (9) jeweils ausgeschaltet wird, falls das angehobene Strom-Istwert-Signal (a-SI1) größer als ein für den Gleichstromsteller (1) vorgegebenes Strom-Sollwert-Signal (SS1) ist.
